# FASCICULE DE BREVET EUROPEEN

(11) **EP 1 257 501 B1**
(45) Date de publication et mention de la délivrance du brevet: **30.07.2008**
(21) Numéro de dépôt: 01909376.4
(22) Date de dépôt: 23.02.2001
(51) Int. Cl.: C01B 31/04, H01M 4/58

(54) **PURIFICATION EN SURFACE DU GRAPHITE NATUREL ET EFFET DES IMPURETES SUR LE BROYAGE ET LA DISTRIBUTION GRANULOMETRIQUE**
REINIGUNG DER OBERFLÄCHE VON NATÜRLICHEM GRAPHIT UND EINFLUSS DER VERUNREINIGUNGEN AUF DAS MAHLEN UND DIE TEILCHENGRÖSSEVERTEILUNG
SURFACE PURIFICATION OF NATURAL GRAPHITE AND EFFECT OF IMPURITIES ON GRINDING AND PARTICLE SIZE DISTRIBUTION

(30) Priorité: 25.02.2000 CA 2299626; 28.04.2000 CA 2307118
(43) Date de publication de la demande: 20.11.2002
(73) Titulaire: Hydro-Québec, Montréal, Québec H2Z 1A4 (CA)
(72) Inventeur: ZAGHIB, Karim, Longueuil, Québec J4M 2M7 (CA); GAUTHIER, Michel, La Prairie, Québec J5R 1E6 (CA); NADEAU, Gabrielle, Montréal, Québec H2H 2C2 (CA); GHERFI, Abdelbast, Brossard, Québec J4X 1W2 (CA); MASS , Monique, Longueuil, Québec J4L 4T9 (CA); BROCHU, Fernand, Longueuil, Québec J4L 3B1 (CA); ARMAND, Michel, Montréal, Québec H3T 1N2 (CA)
(74) Mandataire: Sueur, Yvette
(86) Numéro de dépôt international: PCT/CA2001/000233
(87) Numéro de publication internationale: WO 2001/062666

(56) Documents cités:
- EP-A- 0 573 266
- EP-A- 0 738 018
- EP-A- 0 916 618
- AT-B- 220 123
- DATABASE WPI Section Ch, Week 199115 Derwent Publications Ltd., London, GB; Class E36, AN 1991-106956 XP002169109 & JP 03 050110 A (KANSAI NETSUKAGAKU KK), 4 mars 1991 (1991-03-04)

## Description

### DOMAINE DE L'INVENTION

La présente invention concerne la purification physique ou chimique spécifique du minerai du graphite naturel afin de générer un graphite purifié particulièrement avantageux dans une anode carbone-lithium. Cette purification est appliquée de préférence à la surface du graphite naturel pour permettre la formation d'un film de passivation lors de la première décharge ou l'intercalation du lithium dans le graphite lorsque ce dernier est utilisé dans une pile lithium-ion. Le broyage à une petite taille avant la purification permet l'optimisation de la distribution des particules, donnant lieu à une électrode beaucoup plus homogène. Ce broyage se fait en présence des .. impuretés naturelles du graphite qui jouent le rôle de microabrasif et donne une dureté au graphite qui fait augmenter ses propriétés mécaniques. Il va de soi que ces particules de graphite purifié peuvent servir à d'autres usages, notamment dans le domaine des freins et joints pour voitures, et dans le domaine nucléaire.

### ART ANTÉRIEUR

L'électrode négative à base de carbone-lithium a récemment suscité un grand intérêt tant dans la communauté scientifique qu'industrielle. En effet, l'utilisation d'une telle électrode dans une batterie rechargeable permet de résoudre le problème crucial posé par l'électrode au lithium métallique qui se recharge mal dans les électrolytes liquides à cause de la croissance de dendrites lorsque la densité de charge (C/cm²) et/ou la densité de courant (mA/cm²) dépassent les valeurs limites qui conditionnent le bon fonctionnement de la batterie. Ce problème majeur a retardé l'apparition des batteries au lithium de formats classiques (AA, C, D, etc.) destinées au grand public. La première pile de ce type a été commercialisée au début des années 90 par Sony Energytech. Cette pile est dite lithium-ion et comprend une électrode négative constituée de carbone-lithium.

Le principe de fonctionnement de cette électrode repose sur la réversibilité de l'insertion du lithium entre les couches de carbone. Ces couches sont caractérisées par une très forte anisotropie des forces de liaison carbone-carbone à l'intérieur des couches (covalentes très fortes) et entre les couches (très faibles de type Van der Waals). De ce fait, puisque le lithium est un cation de très faible taille, il peut diffuser rapidement entre les couches 2D en formant avec elles des liaisons de type ioniques n'entraînant pas de modifications irréversibles des liaisons à l'intérieur des couches. Seul un léger écartement entre les couches est observé, permettant ainsi d'accommoder le lithium inséré.

Il est bien connu que la réversibilité de l'insertion électrochimique du lithium dans le carbone est d'autant plus favorable que le cation Li⁻ est dépourvu de sa sphère de solvatation lors de son transfert depuis la solution électrolytique vers l'intérieur du carbone solide. Ainsi, la co-insertion du DMSO (diméthyl sulfoxyde)et du DME diméthyl éthyl) entraîne un écartement plus important des plans (> 300%) contribuant ainsi à une plus grande désorganisation de la structure hôte. Le lithium ainsi inséré a, en outre. une masse et un volume apparents plus importants, ce qui réduit sa mobilité ainsi que sa concentration maximale à l'intérieur des plans. Par ailleurs, en milieu carbonate de propylène, le composé ternaire est très instable, le solvant se réduisant en propène gazeux pouvant entraîner une dégradation violente de la batterie.

Plus récemment, il a été montré que des carbones à cristallinité imparfaite (turbostratiques) pouvaient insérer le lithium en milieu PC (carbonate de propylène) ou PC-DME sans co-intercalation du solvant. La différence de comportement électrochimique d'un graphite de haute cristallinité et d'un carbone mal cristallisé tel le coke traité à une température inférieure à 1800°C, pourrait provenir d'une surtension de dégagement du propène plus importante pour le coke. Cependant, une première étape de décharge résulte en la formation d'un film protecteur à la surface des grains de carbone, produit de la décomposition du solvant. Une fois formé, ce film a une impédance suffisante pour empêcher le transfert d'électron nécessaire à la progression de la réduction du solvant. Mais, il est cependant conducteur par les ions Li⁺ et se comporte de ce fait comme un électrolyte solide. Il est aussi fort probable que ce film intervient dans la désolvatation de l'ion Li⁺ au cours de son transfert et/ou sa réduction à la surface du carbone.

L'électricité consommée lors de cette étape ne peut être restituée lorsque le courant est inversé. Le rendement faradique du 1^{er} cycle est par conséquent faible. La capacité réversible mesurée lors des cycles suivants est directement liée à la nature du carbone et du traitement qu'il a subi ainsi qu'à la nature de l'électrolyte.

Le brevet US 5.882.818 se penche sur les graphites de 1-40 µm. Cette étude se base sur la relation entre la structure et l'électrochimie. Cependant, on ne retrouve aucune information ayant trait à la pureté de la poudre de graphite ou encore son procédé d'obtention.

Le brevet US 5.756.062 discute de la modification de la surface d'un graphite hautement purifié. Le graphite utilisé n'est toutefois pas un graphite brut obtenu directement du minerai. La modification chimique du graphite est élaborée par des traitements à base de fluor, chlore ou phosphore.

Le graphite utilisé conventionnellement comme matériau d'électrode dans une pile lithium-ion est généralement obtenu de 2 sources distinctes, à savoir du graphite synthétique ou encore du graphite naturel hautement purifié thermiquement, préférablement à des températures supérieures à 2500°C. Un tel graphite, bien que d'excellente qualité, est cependant extrêmement coûteux, ce qui a une incidence directe sur le produit final éventuellement vendu sur le marché. De plus, le graphite n'est réduit à l'état de poudre qu'après avoir été purifié ou synthétisé, ce qui cause certains problèmes lors du procédé de broyage. En effet, l'homogénéité de la distribution de grosseur des particules dans la poudre est grandement altérée, puisque le graphite à l'état pur est très fragile. En fait, on peut parler de distribution relativement non homogène. Si une pile est fabriquée directement avec un graphite ayant une telle distribution non homogène, il est clair que sa durée de vie sera grandement réduite. L'alternative est alors de filtrer le graphite afin de ne retenir que les particules ayant la grosseur souhaitée, ce qui entraîne des étapes additionnelles au procédé, et ultimement, une augmentation du coût du matériau qui en résulte.

Il serait donc souhaitable de développer un procédé de purification du graphite naturel peu coûteux ayant des propriétés électrochimiques comparables ou supérieures à celles du graphite actuellement utilisé comme matériau d'électrode dans une pile lithium-ion. Dans une mise en oeuvre préférentielle, le procédé devrait permettre l'obtention d'une poudre de graphite possédant une distribution de grosseur de particules relativement homogène, permettant ainsi d'éviter des étapes de filtration.

### SOMMAIRE DE L'INVENTION

La présente invention concerne un procédé de préparation de particules de graphite caractérisé par au moins les étapes successives suivantes:
a) on effectue d'abord un broyage du graphite jusqu'à l'obtention d'une taille de particules se situant entre environ 1 et 50µm;
b) on purifie ensuite les particules obtenues en a) jusqu'à élimination substantielle des impuretés ainsi que des sites de corrosion.

Les particules de graphite obtenues selon le procédé de l'invention ont une taille variant entre 1 et 50µm et sont généralement libres d'impuretés et de sites de corrosion. De préférence, elles ont les propriétés suivantes:
- une distance interplanaire d002 obtenue par rayons-X variant entre 3,35 Å et 3,38 Å;
- une surface spécifique variant entre 044 et 55 m²/g; et
- un taux de pureté variant entre 98,5% et 99,99%.

L'invention concerne également une anode de carbone-metal, préférablement le lithium, à base de graphite naturel obtenue selon procédé mentionné précédemment. Une telle anode est particulièrement avantageuse dans une pile électrochimique telle une pile de type lithium-ion.

Finalement, un autre aspect de l'invention comprend un graphite purifié comprenant des particules ayant une surface externe substantiellement dépourvue d'impuretés et de sites de corrosion ayant une conductivité électronique, utiles dans nombre d'applications commerciales.

### DESCRIPTION DÉTAILLÉE DE L'INVENTION

Une nouvelle méthode a été élaborée pour produire du graphite purifié sous forme de petites particules utilisables dans une pile électrochimique, par exemple de type lithium-ion, tout en ayant une distribution de grosseurs relativement homogène. Un tel graphite pourrait également être utilisé dans d'autres types d'applications, telles que conducteur électronique dans une cathode (piles) ou piles à combustion, dans le domaine des voitures (freins et joints) ou dans le domaine nucléaire.

La présente invention concerne une méthode de purification chimique et/ou physique des impuretés se trouvant sur la surface du graphite naturel, i.e., là où sera formé le film de passivation. La présente méthode permet de retirer les impuretés qui sont susceptibles de nuire à la formation de ce dernier et au cyclage de l'anode de carbone-lithium. Le procédé de broyage est avantageusement réalisé avant purification car il permet d'obtenir un meilleur contrôle de la taille et de la distribution des particules, d'où une poudre plus homogène ne nécessitant pas de filtration pour retirer des particules trop grosses ou trop petites.

L'étape subséquente de purification vise essentiellement à retirer de la surface des particules de graphite les impuretés qui génèrent une conductivité électronique, tels que les composés comprenant du silicium et du fer. Ces composés causent également le dopage ou la réduction par le lithium des composés qui le contiennent. Ces phénomènes ne doivent absolument pas être présents ou à tout le moins fortement minimisés, dans le film de passivation qui sera formé à la surface de l'électrode, car il entraînera une dégradation de l'efficacité de la pile, et ultimement un court-circuit. Par contre, la présence en surface d'impuretés favorisant la conductivité ionique, tel que le fluorure de calcium, n'influence pas négativement les performances de l'électrode de graphite à cause de son fort caractère ionique peu favorable à une conductivité de nature électronique.

Les impuretés présentes dans un minerai de graphite sont généralement les suivantes (par ordre décroissant): Si > Ca > Fe > Mg > S > Al. Tel que mentionné précédemment, les composés comprenant du silicium doivent être éliminés car d'une part, le lithium réduit ou dope les composés comprenant du silicium (par exemple SiO₂, SiO et Si métal), et d'autre part, les composés de silicium sont des conducteurs électroniques. Cette dernière propriété est totalement incompatible avec les propriétés du film de passivation, qui représente un élément clé d'une bonne anode carbone-lithium caractérisée par une longue durée de vie.

Pour éliminer les composés comprenant du silicium, un traitement acide est utilisé, par exemple avec H₂SO₄, HNO₃, HCI, HF ou leurs mélanges. Un traitement avec HF ou un dérivé fluoré permettant la génération de HF dans le milieu représente une mise en oeuvre particulièrement préférentielle. Ce traitement provoque également une interaction entre le fluor et le calcium déjà présent dans le minerai menant à la formation de fluorure de calcium, qui est un composé fortement ionique, un isolant électronique, de même qu'un bon conducteur anionique à haute température. De plus, la présence de fluorure de calcium n'altérera pas la formation du film de passivation.

La présente méthode de purification ne modifie pas la taille des grains telle que déterminée par le procédé de broyage. Il n'y a donc pas d'agglomération des particules, qui sont donc libres et peuvent former un mélange homogène avec le liant afin d'obtenir une électrode de bonne qualité (rugosité, épaisseur, porosité etc.).

Afin d'illustrer la présente invention, du graphite de minerai de StratminGraphite (Lac des îles - Québec), dont la taille des particules est d'environ 375 µm a été utilisé. Les particules sont d'abord broyées jusqu'à obtention de grains d'une grosseur variant entre 50 et 1 µm. Il est à noter que lorsque la taille de la particule est inférieure à 1 µm, le graphite perd sa cristallinité, et le terme d'intercalation du lithium devient dopage.

Le procédé de broyage peut se faire selon n'importe quelle technique connue de la personne du métier. De telles techniques incluent le broyage par jets ("jet milling"), le broyage par air ("air milling"), le broyage par billes ("ball milling), etc.

L'étape de purification par voie thermique peut être réalisée de façon conventionnelle, i.e., dans un four à une température suffisamment élevée pour permettre la vaporisation de toutes les impuretés, typiquement entre 1000 et 3100°C. L'étape de purification par voie chimique peut être réalisée de différentes façons en utilisant des composés acides à base de fluor, nitrate, sulfate et chlorure ou encore des composés basiques tels que de la potasse ou de la soude, pour nettoyer la surface du graphite brut et permettre ultérieurement la formation d'un film de passivation stable lors de la réduction de l'électrolyte pendant la première intercalation du Li dans le graphite.

Typiquement, l'étape de purification par voie chimique peut comprendre:
- une seule étape en utilisant un acide fluoré, préférablement HF ou un dérivé fluoré tels que NH₄F, NH₅F₂, etc. permettant de générer HF dans le milieu réactionnel;
- une seule étape en utilisant deux composés différents, dont l'un doit être HF ou un dérivé fluoré tel que défini ci-haut, et l'autre peut comprendre un acide non-fluoré tel que HCl, HNO₃, H₂SO₄ etc. L'utilisation de deux composés différents possède l'avantage d'extraire plus d'impuretés qu'avec un acide ou un dérivé fluoré seul;
- deux étapes, en utilisant en premier lieu un acide non-fluoré tel que défini ci-haut, puis en second lieu HF ou un dérivé fluoré tel que défini ci-haut; et
- deux étapes en utilisant une base telles que KOH ou NaOH en premier lieu, suivi de HF ou un dérivé fluoré tel que défini ci-haut.

On notera que l'addition de HNO₃ aux solvants de purification (H₂SO₄ - NH₄F) ou (HCl - NH₄F) permet d'obtenir dans une seule étape un graphite purifié et exfolié. HNO₃ est un oxydant qui s'insère ente les plans du graphite pour exfolier le graphite.

Les étapes de purification par voie chimique peuvent être utilisées de façon indépendante, ou encore en séquence. Pour des raisons évidentes de coût, la purification par voie chimique représente la méthode préférentielle de purification.

Lors de la purification par voie chimique, il est très important de choisir les concentrations des composés ajoutés à cette fin, de même que les conditions d'opération, afin d'éviter tout changement physique ou exfoliation du graphite naturel. En ce sens, la concentration de HF ou des dérivés fluorés ajoutés pour la purification doit préférablement se situer entre 10% et 50% (en poids) et la température pour mettre en oeuvre ce procédé ne devrait préférablement pas excéder 250°C afin de maximiser le rendement. Dans le cas où un autre acide serait utilisé, la concentration de ce dernier varie préférablement entre 10 et 30%.

Pour effectuer la purification par voie mécanique, le graphite est par exemple broyé par broyage à l'air, jusqu'à ce que les particules atteignent une grosseur d'environ 20µm. Les impuretés sont ensuite séparées par flottaison.

### DESSINS

L'invention va maintenant être illustrée à l'aide des dessins annexés donnés à titre purement illustratif et sans limitation, dans lesquels
la figure 1 est un schéma de la méthode conventionnelle;
la figure 2 est un schéma de la méthode selon l'invention;
la figure 3 illustre la formation d'une anode à partir de particules de graphite obtenues selon la méthode de l'invention; la figure 4 illustre une particule de graphite selon l'invention telle que formé à partir de plusieurs cristallites; et
la figure 5 illustre l'exfoliation du graphite dans une particule selon l'invention.

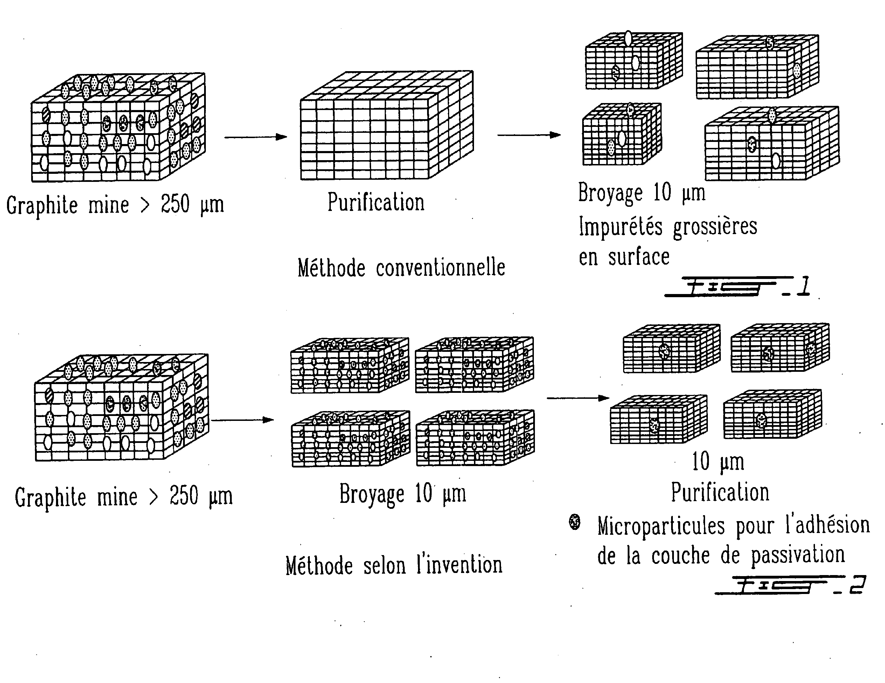

En se référant aux dessins, on verra que selon la méthode conventionnelle illustrée en figure 1, où l'on effectue d'abord la purification avant le broyage, il subsiste encore beaucoup trop d'impuretés en surface. D'autre part, selon la méthode de l'invention et lorsque le minerai contient du calcium, il n'existe plus d'impuretés en surface. Tout ce que l'on retrouve, ce sont des particules de CaF₂ qui se sont formées au cours de la purification, par voie chimique dans ce cas précis.

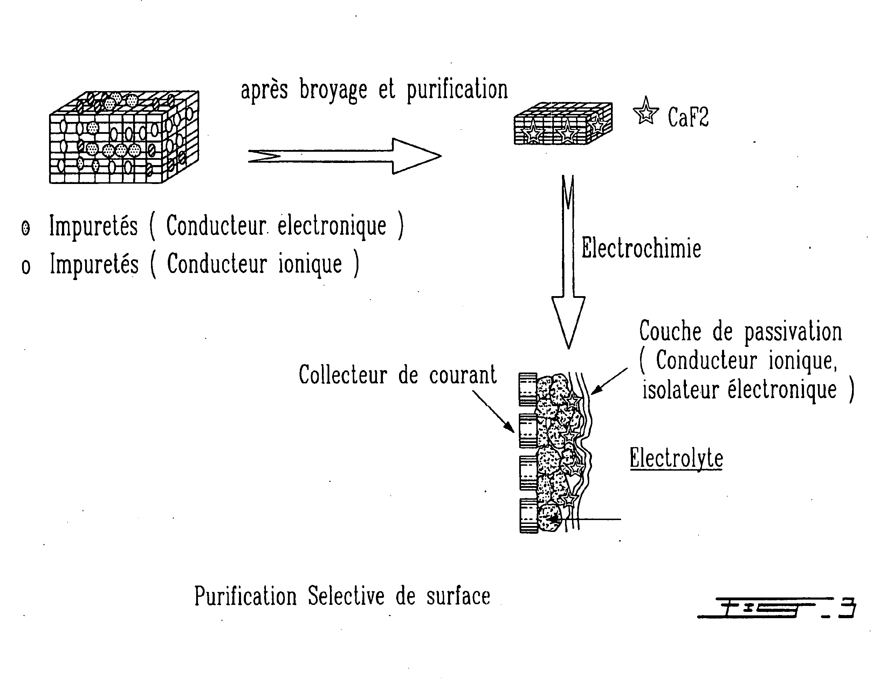

La figure 3 illustre la formation d'une anode avec des particules de graphite obtenues selon la méthode de l'invention, déposées sur un collecteur. Lors de la réduction, il y a formation d'un film de passivation qui est à la fois conducteur ionique et isolateur électronique, ce qui représente des conditions idéales en électrochimie.

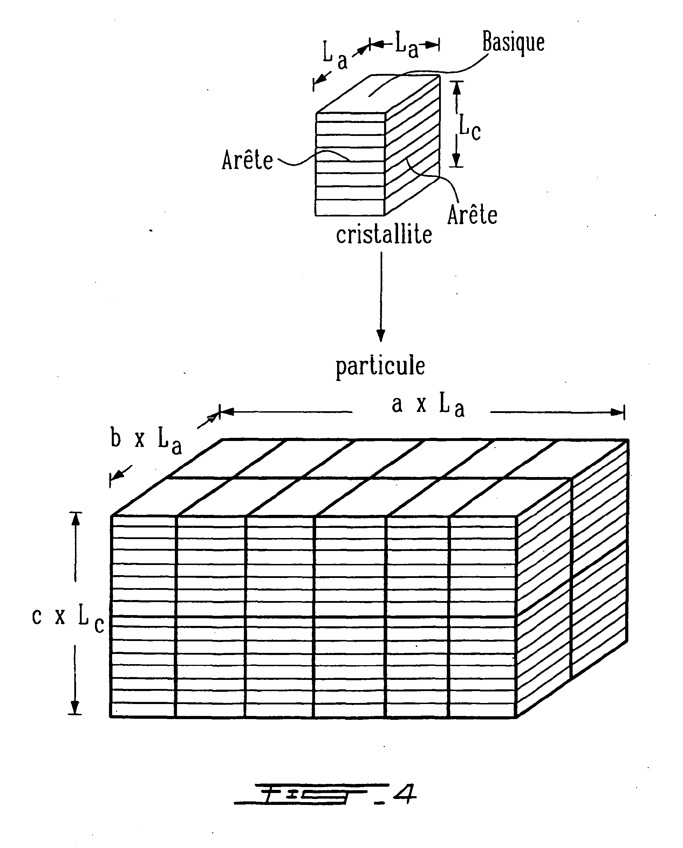

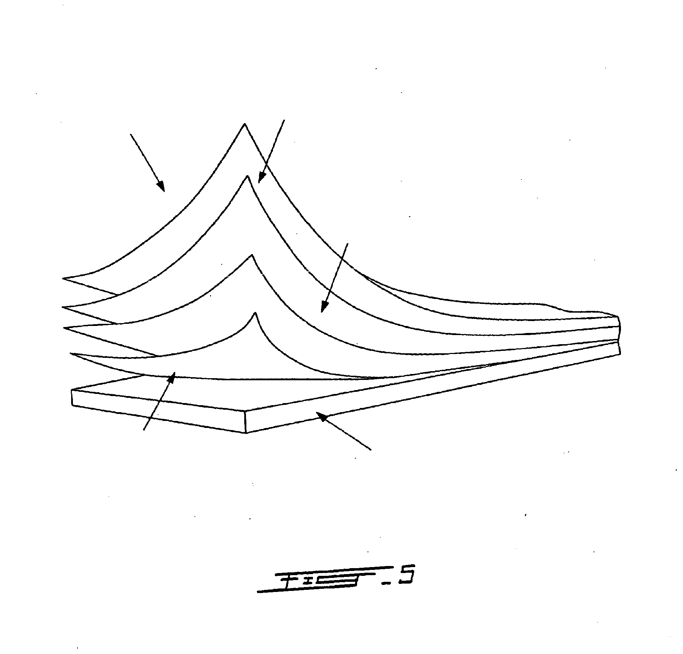

La figure 4 montre que la particule de graphite selon l'invention est constituée d'un ensemble de cristallites. Lors de l'insertion du lithium dans le graphite, il est très important que le Lc soit contrôlé. Dans ce cas précis, on a utilisé des acides très forts pour la purification, le Lc devient très petit et on obtient des graphites qu'illustrés en figure 5.

Les exemples suivants sont fournis afin d'illustrer des modes de réalisation préférentiels de l'invention, et ne doivent pas être considérés comme en limitant la portée.

### Exemple 1

Un graphite naturel ayant des particules de taille initiale de 375 µm est broyé par un procédé "air-milling" jusqu'à ce que les particules atteignent une grosseur de 10µm. La taille des particules obtenue (distribution de 50% des particules D50%) est de 10,52 µm. La distribution gaussienne du graphite a un seul maximum sans aucun épaulement. La distribution granulométrique a été déterminée à l'aide de l'analyseur de particules Microtrac™ fabriqué et vendu par Leeds & Northrul. Le méthanol a été utilisé comme liquide porteur. Subséquemment, le graphite broyé est lixivié dans un bain aqueux de HF 30%. La température du mélange est fixée à 90°C, et le temps de lixiviation est de 180 minutes. Le graphite est ensuite filtré, lavé à grande eau, et la poudre est séchée pendant 24 heures à 120°C.

La poudre de graphite obtenue est analysée en rétrodiffusion couplée avec le EDX (Energy Dispersive X-ray). Aucune exfoliation des particules n'a été observée. Par ailleurs, l'analyse par EDX montre que la majorité des impuretés restantes est constituée de calcium. La pureté de cet échantillon est de 99,6%, tel qu'obtenu par la méthode d'analyse des cendres résiduelles des impuretés.

Ce graphite est mélangé avec le liant polyvinylidène fluoré (PVDF) (Kruha : KF-1700) et la N-méthyl pyrolidone dans un ratio massique 90:10. Ce mélange est appliqué sur un collecteur de cuivre par la méthode Doctor Blade™.

L'électrode de graphite ainsi obtenue est séchée sous vide à 120°C pendant 24 heures. La dite électrode est montée dans une pile bouton de type 2035 (diamètre de 20mm, épaisseur 3,5mm). Un séparateur Celgard™ 2300 imbibé d'électrolyte 1M LiPF₆ + EC/DMC : 50/50 (carbonate d'éthylène + diméthylcarbonate) est utilisé. Le lithium métallique est utilisé comme référence et contre-électrode.

Les tests électrochimiques ont été conduits à la température ambiante. Les courbes de décharge - charge ont été obtenues entre 0 V et 2.5 V en C/24. Le premier rendement coulombique est de 85%, ce qui est supérieur au graphite commercial utilisé dans les batteries lithium-ion (typiquement 81%). La capacité réversible est de 365 mAh/g équivalent à x = 0,98 dans LiₓC₆. Cette valeur obtenue est très proche de la valeur théorique du graphite (372 mAh/g). On ne constate aucun effet négatif associé à la présence des impuretés résiduelles de Ca.

### Exemple 2

Un graphite naturel ayant des particules de taille initiale de 375 µm est broyé par un procédé "air-milling" jusqu'à ce que les particules atteignent une grosseur de 10 µm. Le graphite est ensuite lixivié dans un bain de mélange aqueux comprenant 30% H₂SO₄ et 30% HF. 106,5 ml du mélange d'acide est chauffé à 90°C, et 30 g de graphite sont alors ajoutés dans la solution. Le graphite est lixivié pendant 180 minutes dans le réacteur. Le solide est ensuite filtré, lavé à grande eau, et séché à 120°C pendant 24 heures. La taille (D50%) est de 10,92 µm, et ce avant et après purification. La distribution gaussienne du graphite a un seul maximum sans aucun épaulement.

L'analyse des impuretés de ce graphite par EDX montre la présence majoritaire des éléments Ca et F. L'analyse des cendres résiduelles des impuretés sur le graphite montre une pureté de 99.68%. La préparation de l'électrode et les tests électrochimiques se font conformément à la procédure décrite dans l'exemple 1.

L'efficacité coulombique du premier cycle est de 90%. Le plateau irréversible du film de passivation est formé normalement vers 800 mV. Ceci veut dire que les éléments Ca, F ou CaF₂ n'ont pas influencé la formation du film de passivation. La capacité réversible du graphite est de 356 mAh/g, soit l'équivalent de x = 0,96 dans la formation LiₓC₆.

### Exemple 3

Le graphite naturel utilisé dans cet exemple est traité de façon identique à celle décrite dans l'exemple 2 à l'exception de la concentration de HF qui est de 20 %. L'analyse des impuretés de ce graphite par EDX montre la présence majoritaire des éléments Ca et F. L'analyse des cendres résiduelles des impuretés sur ce graphite montre une pureté de 99,75%. La préparation de l'électrode et les tests électrochimiques sont identiques aux procédures décrites dans l'exemple 1.

L'efficacité coulombique du premier cycle est de 89%. Le plateau irréversible du film de passivation est formé normalement vers 800 mV. La capacité réversible du graphite est de 365 mAh/g, équivalent de x = 0,98 suivant la formation de LiₓC₆.

### Exemple 4

Le graphite naturel utilisé dans cet exemple est traité de façon identique à celle décrite dans l'exemple 2 à l'exception de la concentration de HF qui est de 10 %. La préparation de l'électrode et les tests électrochimiques sont identiques aux procédures décrites dans l'exemple 1.

L'efficacité coulombique du premier cycle est de 75%. La capacité irréversible de 106.7 mAh/g est très élevée comparée à celle du graphite des exemples 2 et 3, lixivié respectivement avec HF 30% et HF 20%. La capacité réversible est de 318 mAh/g, équivalent à x=0,85 dans la formation LiₓC₆.

### Exemple 5

Le graphite naturel utilisé dans cet exemple est traité de façon identique à celle décrite dans l'exemple 2 à l'exception du mélange H₂SO₄-HF dans lequel le HF est remplacé par NH₄F, également présent à une concentration de 30 %.

L'analyse des impuretés de ce graphite par EDX montre la présence majoritaire des éléments Ca et F. L'analyse des cendres résiduelles des impuretés sur ce graphite montre une pureté de 99,64%. La préparation de l'électrode et les tests électrochimiques sont identiques aux procédures décrites dans l'exemple 1.

L'efficacité coulombique du premier cycle est de 90%. La capacité irréversible du graphite est de 44 mAh/g. La capacité réversible est de 352 mAh/g, équivalent à x = 0,96 suivant la formation LiₓC₆.

### Exemple 6

Le graphite naturel utilisé dans cet exemple est traité de façon identique à celle décrite dans l'exemple 2 à l'exception du mélange H₂SO₄-BF dans lequel HF est remplacé par NH₄F, HF (NH₅F₂) à une concentration de 30%.

L'analyse des impuretés de ce graphite par EDX montre la présence majoritaire du Ca et F. L'analyse des cendres résiduelles des impuretés sur ce graphite montre une pureté de 99,57%. La préparation de l'électrode et les tests électrochimiques sont identiques à ceux décrits dans l'exemple 1.

L'efficacité coulombique du premier cycle est de 88%. La capacité irréversible est de 49 mAh/g. La capacité réversible est de 346,7 mAh/g, équivalent à x = 0,93 dans la formation LiₓC₆.

### Exemple 7

Un graphite naturel ayant des particules de taille initiale de 375 µm est broyé par un procédé "air-milling" jusqu'à ce que les particules atteignent une grosseur de 10 µm. Le graphite est lixivié en deux étapes. En premier lieu, avec une solution aqueuse 30% HCI, suivi par une solution aqueuse 30% HF. Pour chacune des lixiviations, 106,5 ml de la solution acide sont chauffés à 90°C, et 30 g de graphite sont alors ajoutés. Le graphite est lixivié pendant 180 minutes dans le réacteur. Le solide est filtré, lavé à grande eau, et séché à 120°C pendant 24 heures.

La taille (D50%) est de 10,02µm. La distribution gaussienne du graphite a un seul maximum sans aucun épaulement.

L'analyse des impuretés de ce graphite par EDX montre l'absence totale des éléments Si et Ca. L'élément majoritaire obtenu comme impureté est le soufre. Une analyse des cendres résiduelles des impuretés sur le graphite montre une pureté de 99,9%. La préparation de l'électrode et les tests électrochimiques sont identiques aux procédures décrites à l'exemple 1.

L'efficacité coulombique du premier cycle est de 88%. Le plateau irréversible du film de passivation est formé normalement vers 800 mV. On peut donc en conclure que la présence du soufre n'a pas d'effets néfastes lors de la formation du film de passivation. La capacité réversible du graphite est de 357 mAh/g l'équivalent de x = 0,96 dans la formulation LiₓC₆.

### Exemple 8

Le graphite naturel utilisé dans cet exemple est traité de façon identique à celle décrite dans l'exemple 7 en remplaçant toutefois HCl par HNO₃.

La taille (D50%) du graphite est de 10,26 µm. La distribution gaussienne du graphite a un seul maximum sans aucun épaulement.

L'analyse des impuretés de ce graphite par EDX montre la présence des éléments Ca et Mg, mais l'absence totale de Si. L'analyse des cendres résiduelles des impuretés du graphite montre une pureté de 99,96%. La préparation de l'électrode et les tests électrochimiques sont identiques aux procédures décrites dans l'exemple 1.

L'efficacité coulombique du premier cycle est de 86%. Le plateau irréversible du film de passivation est formé normalement vers 800 mV, ce qui confirme que les éléments Ca et Mg n'ont pas influencé la formation du film de passivation. La capacité réversible du graphite est de 353 mAh/g qui est l'équivalent de x = 0,95 dans la formulation LiₓC₆.

### Exemple 9

Le graphite naturel utilisé dans cet exemple est traité de façon identique à celle décrite dans l'exemple 7 en remplaçant toutefois HCl par une base, nommément KOH, à une concentration de 30%.

L'analyse des impuretés de ce graphite par EDX montre la présence des éléments Ca et F. L'analyse des cendres résiduelles des impuretés sur ce graphite montre une pureté de 99,77%.

L'efficacité coulombique du premier cycle est de 88%. La capacité réversible est 345 mAh/, équivalent à x = 0,93 dans la formulation LiₓC₆.

### Exemple 10

Un graphite comprenant des particules de taille 375 µm est initialement purifié dans un bain de HF selon la procédure suivante. 106,5 ml d'acide sont chauffés à 90°C, et 30 g de graphite sont alors ajoutés. Le graphite est lixivié pendant 180 minutes dans le réacteur. Le solide est ensuite filtré, lavé à grande eau, et séché à 120°C pendant 24 heures.

Subséquemment, le graphite est broyé jusqu'à ce que la taille des particules atteigne 10 µm selon la procédure énoncée précédemment. La taille (D50%) est de 10,67 µm. La distribution du graphite possède deux maxima avec épaulement au niveau de taille > 18 µm. Il est bien connu qu'un tel type de distribution est moins favorable au fonctionnement optimal des anodes cabone-lithium, et permet d'illustrer la meilleure homogénéité d'un graphite naturel broyé préalablement à sa purification.

L'analyse des impuretés de ce graphite par EDX montre la présence de Ca et Mg en grande quantité comme impuretés. Une analyse des cendres résiduelles des impuretés sur le graphite montre une pureté de 99,43%. La préparation de l'électrode et les tests électrochimiques sont identiques aux procédures décrites dans l'exemple 1.

L'efficacité coulombique de ce premier cycle est de 75%. La valeur 110 mAh/g de la capacité irréversible est élevée à cause de son taux de pureté (99,43%) et sa surface spécifique élevée (7,08m²/g). La capacité réversible du graphite est de 356 mAh/g, équivalent à x = 0,96 dans la formulation de LiₓC₆.

### Exemple 11

Le graphite utilisé dans cet exemple est préparé suivant la méthode de l'exemple 10. Les conditions de purification et de broyage sont les mêmes que celles utilisées dans l'exemple 7.

La taille (D50%) des particules de ce graphite est de 12.40 µm. La distribution possède deux maxima, un premier à 10 µm, et un second à 17,7 µm.

L'analyse des impuretés de ce graphite par EDX montre la présence d'un pic intense de Si suivi par le Mg et le Ca. L'analyse des cendres résiduelles des impuretés du graphite montre une pureté de 99,95%. La préparation de l'électrode et les tests électrochimiques sont identiques aux procédures décrites dans l'exemple 1.

L'efficacité coulombique du premier cycle est de 86%. La capacité irréversible est de 59 mAh/g. La capacité réversible est de 362 mAh/g, qui est l'équivalent de x = 0,97 suivant la formule LiₓC₆.

### Exemple 12

Le graphite naturel utilisé dans cet exemple est traité de façon identique à l'exemple 11 en remplaçant HCI par HNO₃.

La taille de la particule (D50%) de ce graphite est de 12.11µm. La distribution possède deux maxima, un premier à 8 µm et un second à 18µm.

L'analyse des impuretés de ce graphite par EDX montre la présence du Ca. L'analyse des cendres résiduelles des impuretés du graphite montre une pureté de 99,99%.

La préparation de l'électrode et les tests électrochimiques sont identiques aux procédures décrites dans l'exemple 1.

L'efficacité coulombique du premier cycle est de 88%. La capacité irréversible est de 56 mAh/g. La capacité réversible est de 396,9 mAh/g qui est à x = 1,066 suivant la formulation LiₓC₆.

Comme on peut le constater dans les exemples 10-12, le fait de procéder à l'étape de purification avant celle du broyage produit un graphite ayant des propriétés physiques et chimiques beaucoup moins avantageuses.

### Exemple 13

Selon la procédure de l'exemple 1, la taille initiale du graphite est ramenée de 375 µm à 10 µm par le procédé de broyage. Le graphite est ensuite soumis à un traitement thermique à haute température (2800°C) pendant 2 heures. L'analyse des impuretés de ce graphite par EDX montre l'absence de celles-ci.

L'efficacité coulombique du premier cycle est de 87%. La capacité irréversible est de 54.7 mAh/g. La capacité réversible est de 346 mAh/g, équivalent à x = 0,93 dans la formulation LiₓC₆.

### Exemple 14

Dans cet exemple, on a utilisé le graphite naturel Chinois ayant une teneur en Si supérieure à celle du graphite du StratminGraphite, alors que la teneur en Ca est inférieure à ce dernier.

La lixiviation et la préparation électrochimique du graphite sont identiques à ce qui est mentionné dans l'exemple 2.

L'efficacité coulombique du premier cycle est de 88%. La capacité réversible est de 350 mAh/g, équivalent à x = 0,94 dans la formation LiₓC₆.

On constate par cet exemple qu'un graphite naturel dont les impuretés en silicium (silice) sont en relativement faibles concentrations par rapport aux impuretés en Ca et en Mg, est favorable au mode de réalisation préférentiel de l'invention.

Ce procédé de purification permet de contrôler la distance interplanaire Lc (Fig. 3). Dans le domaine des batteries lithium-ion, le contrôle de ce paramètre permet de minimiser la coinsertion du solvant et de stabiliser le film de passivation.

Le fait que dans ce procédé de purification, le broyage des particules soit fait en premier lieu et que la purification soit effectuée en deuxième lieu permet de nettoyer toutes les nouvelles arêtes qui apparaîtront après le broyage avec des liaisons oxygène, ce qui fait réduire le taux d'oxygène dans le produit. Ce procédé élimine à la fois l'oxydation du graphite et réduit la capacité irréversible due à la formation du LiO₂.

### Exemple 15

Un graphite naturel provenant du Brésil (tableau 1) ayant des particules de taille initiale de 323 µm est broyé par un procédé "air-milling" jusqu'à ce que les particules atteignent une grosseur de 20 µm. Ce dernier est traité de façon identique à celle décrite dans l'exemple 5, avec le mélange H₂SO₄-NH₄F à une concentration de 30 %.

L'analyse des cendres résiduelles des impuretés sur ce graphite montre une pureté de 99,99%. La surface spécifique est de 4,285m''/g. La préparation de l'électrode et les tests électrochimiques sont identiques aux procédures décrites dans l'exemple 1.

L'efficacité coulombique du premier cycle est de 91,0%. La capacité irréversible du graphite est de 37 mAh/g. La capacité réversible est de 353 mAh/g équivalent à x = 0,95 suivant la formation LiₓC₆.

### Exemple 16

Un graphite naturel provenant du Lac Knife (Québec, Canada) (tableau 2) ayant des particules de taille initiale de 323 µm est broyé par un procédé "air-milling" jusqu'à ce que les particules atteignent une grosseur de 20 µm alors que la teneur en oxygène est de 1,9%. Ce dernier est traité de façon identique à celle décrite dans l'exemple 5, avec le mélange H₂SO₄-NH₄F à une concentration de 30 %. Après lixiviation le taux d'oxygène est réduit à 0,18%. Il est clair que le procédé selon l'invention diminue largement le taux d'oxygène.

L'analyse des cendres résiduelles des impuretés sur ce graphite montre une pureté de 99,24%. La surface spécifique est de 2,696 m²/g. La préparation de l'électrode et les tests électrochimiques sont identiques aux procédures décrites dans l'exemple 1.

L'efficacité coulombique du premier cycle est de 91 %. La capacité irréversible du graphite est de 36 mAh/g. La capacité réversible est de 353 mAh/g équivalent à x = 0,95 suivant la formation LiₓC₆.

### Exemple 17

Le graphite naturel utilisé dans cet exemple est identique à celui utilisé dans l'exemple 15. Il est traité de façon identique à celle décrite dans l'exemple 5 en remplaçant toutefois le H₂SO₄ par HCl.

L'analyse des cendres résiduelles des impuretés sur ce graphite montre une pureté de 99,99%. La préparation de l'électrode et les tests électrochimiques sont identiques aux procédures décrites dans l'exemple 1.

L'efficacité coulombique du premier cycle est de 89,4 %. La capacité irréversible du graphite est de 43 mAh/g. La capacité réversible est de 367 mAh/g équivalent à x = 0,986 suivant la formation LiₓC₆.

### Exemple 18

Le graphite naturel utilisé dans cet exemple est identique à celui utilisé dans l'exemple 15 avec une taille de particule moyenne de 10 µm. Le graphite est lixivié dans un bain de mélange aqueux comprenant 150ml de HCI (30%) et 1,0 g de CaF₂. Le mélange est chauffé à 90°C, et 20 g de graphite sont alors ajoutés dans la solution. Le graphite est lixivié pendant 180 minutes dans le réacteur. Le solide est ensuite filtré, lavé à grande eau, et séché à 120°C pendant 24 heures.

L'analyse des cendres résiduelles des impuretés sur ce graphite montre une pureté de 99,84%. La préparation de l'électrode et les tests électrochimiques sont identiques aux procédures décrites dans l'exemple 1.

L'efficacité coulombique du premier cycle est de 85%. La capacité irréversible du graphite est de 64 mAh/g. La capacité réversible est de 366 mAh/g, équivalent à x = 0,98 suivant la formation LiₓC₆.

### Exemple 19

Le graphite naturel utilisé dans cet exemple est identique à celui utilisé dans l'exemple 18. Le graphite naturel est traité de façon identique à celle décrite dans l'exemple 18 en remplaçant toutefois HCl par H₂SO₄ (30%) et le CaF₂ par 1.5g de LiF.

L'analyse des cendres résiduelles des impuretés sur ce graphite montre une pureté de 99,99%. La préparation de l'électrode et les tests électrochimiques sont identiques aux procédures décrites dans l'exemple 1.

L'efficacité coulombique du premier cycle est de 82 %. La capacité irréversible du graphite est de 77,5 mAh/g. La capacité réversible est de 365 mAh/g équivalent à x = 0,98 suivant la formation LiₓC₆.

**Table-1 : Graphite brésilien (NATIONAL DE GRAFITE LTDA)**

| **SUBSTANCE CHIMIQUE (PPM)** | | | | | | | | | | | | | |
|---|---|---|---|---|---|---|---|---|---|---|---|---|---|
| Fe | Mo | Sb | As | V | Cr | Cu | Ni | Pb | Co | Ca | Al | Ge | Si |
| 103 | 1.5 | <1 | <0.5 | 9.7 | 6.5 | 4.2 | 0.3 | <1 | 0.5 | 3 | 528.8 | <1 | 0.3 |

**Table-2 : Graphite Lac Knife (MAZARIN)**

| **SUBSTANCE CHIMIQUE (PPM)** | | | | | | | | | | | | | | |
|---|---|---|---|---|---|---|---|---|---|---|---|---|---|---|
| Ba | Be | Cd | Ce | Co | Cu | Dy | Eu | La | Li | Mo | Nd | Ni | Pb | Pr |
| 320 | <1 | <2 | 59 | 6 | 1000 | <1 | <1 | 47 | 73 | 2400 | <25 | 404 | 410 | <10 |

| Sc | Sm | V | Zn | Ga | Nb | Rb | Sn | Sr | Ta | Te | Th | U | Y | Zr |
|---|---|---|---|---|---|---|---|---|---|---|---|---|---|---|
| 17 | 20 | 2600 | 775 | 21 | 23 | 200 | <10 | 180 | <5 | <10 | <3 | 64 | 55 | 650 |

Bien que la présente invention ait été décrite à l'aide de mises en oeuvre spécifiques, il est entendu que plusieurs variations et modifications peuvent se greffer aux dites mises en oeuvre, et la présente demande vise à couvrir de telles modifications, usages ou adaptations de la présente invention suivant, en général, les principes de l'invention et incluant toute variation de la présente description qui deviendra connue ou conventionnelle dans le champ d'activité dans lequel se retrouve la présente invention, et qui peut s'appliquer aux éléments essentiels mentionnés ci-haut, en accord avec la portée des revendications suivantes.

## Revendications

1. Procédé de purification en surface de particules de graphite naturel, ledit procédé comportant au moins les étapes consécutives suivantes :
a) broyage des particules de graphite naturel jusqu'à l'obtention d'une taille de particules se situant entre 1 et 50 µm; et
b) purification des particules broyées obtenues dans l'étape a) par voie chimique, selon l'une des modalités suivantes :
- purification dans un milieu acide aqueux qui comprend H₂SO₄, HNO₃, HCl ou un de leurs mélanges, dans ce cas, la concentration en acide représente de 10 à 30% du poids total du milieu acide aqueux ; ou bien
- purification dans un milieu acide aqueux contenant au moins un dérivé fluoré générant HF, dans ce cas la concentration en dérivé fluoré représente de 10 à 50 % par rapport au poids total du milieu acide ; ou bien
- purification dans un milieu basique aqueux contenant au moins un dérivé fluoré générant HF, dans ce cas la concentration en dérivé fluoré représente de 10 à 50% par rapport au poids total du milieu basique aqueux ; ou bien
- purification en une seule étape en utilisant un composé fluoré permettant de générer HF et un acide non fluoré; la concentration en dérivé fluoré générant HF étant de 10 à 50 % en poids et la concentration un acide autre que HF étant de 10 à 30% en poids ; ou bien
- purification en deux étapes, utilisant d'abord un acide non fluoré puis un dérivé générant HF; la concentration en dérivé fluoré générant HF étant de 10 à 50 % en poids et la concentration en acide non fluoré étant de 10 à 30% en poids ; ou bien
- purification en deux étapes, utilisant d'abord une base telle que KOH ou NaOH, puis un dérivé générant HF; la concentration en base étant de 30 % en poids et la concentration en dérivé générant HF étant de 10 à 30 %.
l'étape b) de purification étant réalisée à une température inférieure à 250° C.

2. Procédé de purification en surface de particules de graphite naturel selon la revendication 1, dans lequel la durée de l'étape b) est égale à 180 minutes.

3. Procédé de purification selon la revendication 1 ou 2, dans lequel l'étape b) de purification par voie chimique comprend une seule purification utilisant un dérivé fluoré permettant de générer HF.

4. Procédé de purification selon l'une quelconque des revendications 1 à 3, **caractérisé en ce que** le dérivé générant HF est choisi dans le groupe des dérivés fluorés constitué par NH₄F, NH₅F₂ ou XF, X étant un métal alcalin ou alcalino-terreux, ou leurs mélanges.

5. Procédé de purification selon l'une quelconque des revendications 1, 2 et 4 3, **caractérisé en ce que** dans l'étape b) la purification s'effectue par un acide en présence d'au moins deux sels générant deux acides dont l'un est HF.

6. Procédé de purification selon l'une quelconque des revendications 1 à 5, dans lequel le graphite est choisi dans le groupe constitué par les graphites de type chinois, les graphites de type Lac Knife et les graphites de type brésilien.

7. Particules de graphite purifiées susceptibles d'être obtenues par mise en oeuvre d'un procédé défini dans l'une quelconque des revendications 1 à 6.

8. Particules de graphite purifiées selon la revendication 7, **caractérisées en ce que** :
a. leur distance interplanaire d002 obtenue par Rayons X varie entre 3,35 Å et 3,38 Å;
b. leur surface spécifique varie entre 0,4 et 55 m2 /g; et
c. leur taux de pureté varie entre 98,5 % et 99,99 %.

9. Particules de graphite purifiées selon la revendication 7 ou 8, d'une taille comprise entre 1 et 50 µm et dont les impuretés et les sites de corrosion ont été partiellement ou en totalité éliminés de la surface desdites particules.

10. Procédé de préparation d'une anode de carbone pour générateur électrochimique rechargeable comprenant un métal alcalin ou alcalino-terreux, le procédé consistant à conditionner des particules, telles que définies dans l'une quelconque des revendications 7 à 9, sous forme d'une anode.

11. Procédé de préparation d'une anode de carbone pour générateur électrochimique rechargeable selon la revendication 10, dans lequel les particules de carbone purifiées sont mélangées avec au moins un liant et avec un solvant, le mélange ainsi obtenu est épandu sur un collecteur métallique.

12. Procédé de préparation d'une anode de carbone selon l'une quelconque des revendications 10 à 11, **caractérisé en ce que** le métal alcalin est le lithium.

13. Anode de carbone à base de particules de graphite purifiées telles que définies dans l'une quelconque des revendications 7 à 9.

14. Pile électrochimique comprenant une anode selon la revendication 13.

15. Pile électrochimique selon la revendication 14, **caractérisée en ce qu'**elle est une pile de type lithium-ion.

## Claims

1. A process for the surface purification of natural graphite particles, said process comprising at least the following consecutive steps:
a) grinding the natural graphite particles, until said particles reach a size between 1 and 50 µm ; and
b) chemical purification of the grinded particles obtained in step a), according to one of the following embodiments :
- purification in an aqueous acid medium which comprises H₂SO₄, HNO₃, HCl or a mixture thereof, wherein the acid concentration represents from 10 to 30% of the total weight of the aqueous acid medium ; or
- purification in an aqueous acid medium which contains at least one fluorinated derivative generating HF, wherein the fluorinated derivative concentration is from 10 to 50% of the total weight of the aqueous acid medium ; or
- purification in a aqueous basic medium which contains at least one fluorinated derivative generating HF, wherein the fluorinated derivative concentration is from 10 to 50% of the total weight of the aqueous basic medium; or
- purification in one single step using a fluorinated compound able to generate HF and a non fluorinated acid, wherein the concentration of the fluorinated compound able to generate HF is from 10 to 50% (wt) and the concentration of acid different from HF is from 10 to 30 % (wt), or
- purification in two steps, using first a non fluorinated acid, and then a derivative generating HF, wherein the concentration of the fluorinated derivative generating HF is from 10 to 50% (wt) and the non fluorinated acid concentration is from 10 to 30% (wt) ; or
- purification in two steps, using first a base such as KOH or NaOH, then a derivative generating HF, wherein the base concentration is 30% (wt) and the concentration of the derivative generating HF is from 10 to 30% ;
the purification step b) being performed at a temperature lower than 250°C.

2. A process for the surface purification of natural graphite particles according to claim 1, wherein the duration of step b) is 180 minutes.

3. A purification process according to claim 1 or 2, wherein the chemical purification of step b) comprises a single purification, using a fluorinated derivative able to generate HF.

4. A purification process according to any of claims 1 to 3, wherein the fluorinated derivative able to generate HF is selected from the group consisting of NH₄F, NH₅F₂ or XF, X being an alkali or an alkaline-earth metal, or mixtures thereof.

5. A purification process according to any of claims 1 to 4, wherein, in step b), the purification is carried out by means of an acid in the presence of at least two salts generating two acids one of which being HF.

6. A purification process according to any of claims 1 to 5, wherein the graphite is selected from the group consisting of Chinese type graphite, Lac Knife type graphite and Brasilian type graphite.

7. Purified graphite particles obtainable by implementing a process according to any of claims 1 to 6.

8. Purified graphite particles according to claim 7, **characterized in that** :
- the interplanar distance d002, measured by X-rays, varies from 3.35 Å to 3.38 Å;
- the specific surface varies from 0.4 to 55 m²/g; and
- the level of purity varies from 98.5% to 99.99%.

9. Purified graphite particles according to claim 7 or 8, having a size between 1 and 50 µm, and wherein the impurities and corrosion sites have been partially or totally eliminated from the surface of said particles.

10. A method for the preparation of an carbon anode for a rechargeable electrochemical generator comprising an alkali or alkaline earth metal, said method consisting in conditionning said particles according to any of claims 7-9, in the form of an anode.

11. The method for the preparation of a carbon anode for a rechargeable electrochemical generator according to claim 10, wherein the purified carbon particles are mixed with at least one binder and with a solvent, the mixture thus obtained being spread on a metallic collector.

12. The method for the preparation of a carbon anode for a rechargeable electrochemical generator according to any of claims 10 and 11, wherein the alkali metal is lithium.

13. An anode based on purified carbon particles according to any of claims 7-9.

14. An electrochemical battery comprising an anode according to claim 13.

15. An electrochemical battery according to claim 14. which is a lithium ion battery.

## Patentansprüche

1. Verfahren zur Oberflächenreinigung von natürlichen Graphitteilchen, wobei das Verfahren zumindest die folgenden, nacheinander durchgeführten Schritte umfasst:
a) Zerkleinern von natürlichem Graphit bis zum Erhalt einer Teilchengröße zwischen 1 und 50 µm und
b) chemisches Reinigen der in Schritt a) erhaltenen zerkleinerten Teilchen gemäß auf eine der folgenden Arten:
- Reinigung in einem sauren wässrigen Medium, das H₂SO₄, HNO₃, HCl oder ein Gemisch davon umfasst, wobei die Säurekonzentration in diesem Fall 10 bis 30 % des Gesamtgewichts des sauren wässrigen Mediums beträgt; oder
- Reinigung in einem sauren wässrigen Medium, das zumindest ein fluoriertes, HF erzeugendes Derivat enthält, wobei die Konzentration des fluorierten Derivats in diesem Fall 10 bis 50 % des Gesamtgewichts des sauren Mediums beträgt; oder
- Reinigung in einem basischen wässrigen Medium, das zumindest ein fluoriertes, HF erzeugendes Derivat enthält, wobei die Konzentration des fluorierten Derivats in diesem Fall 10 bis 50 % des Gesamtgewichts des basischen wässrigen Mediums beträgt; oder
- Reinigung in einem Schritt unter Verwendung einer fluorierten Verbindung, die die Erzeugung von HF ermöglicht, und einer nicht fluorierten Säure, wobei die Konzentration des fluorierten, HF erzeugenden Derivats 10 bis 50 Gew.-% und die Konzentration der Säure, die nicht HF ist, 10 bis 30 Gew.-% beträgt; oder
- Reinigung in zwei Schritten, wobei zunächst eine nicht fluorierte Säure und dann ein HF erzeugendes Derivat eingesetzt werden, wobei die Konzentration des fluorierten, HF erzeugenden Derivats 10 bis 50 Gew.-% und die Konzentration der nicht fluorierten Säure 10 bis 30 Gew.-% beträgt; oder
- Reinigung in zwei Schritten, wobei zunächst eine Base, wie z.B. KOH oder NaOH, und dann ein HF erzeugendes Derivat eingesetzt werden, wobei die Konzentration der Base 30 Gew.-% und die Konzentration des HF erzeugenden Derivats 10 bis 30 Gew.-% beträgt;
wobei der Reinigungsschritt b) bei einer Temperatur von weniger als 250 °C durchgeführt wird.

2. Verfahren zur Oberflächenreinigung von natürlichen Graphitteilchen nach Anspruch 1, worin die Dauer von Schritt b) 180 min beträgt.

3. Reinigungsverfahren nach Anspruch 1 oder 2, worin der Schritt b) zur chemischen Reinigung eine einzige Reinigung unter Verwendung eines fluorierten Derivats, das die Erzeugung von HF ermöglicht, umfasst.

4. Reinigungsverfahren nach einem der Ansprüche 1 bis 3, **dadurch gekennzeichnet, dass** das HF erzeugende Derivat aus der aus NH₄F, NH₅F₂ oder XF, wobei X ein Alkalimetall oder ein Erdalkalimetall ist, und Gemischen davon bestehenden Gruppe fluorierter Derivate ausgewählt ist.

5. Reinigungsverfahren nach einem der Ansprüche 1, 2, 3 und 4, **dadurch gekennzeichnet, dass** die Reinigung in Schritt b) durch eine Säure in Gegenwart von zumindest zwei Salzen erfolgt, die zwei Säuren erzeugen, von denen eine HF ist.

6. Reinigungsverfahren nach einem der Ansprüche 1 bis 5, worin der Graphit aus der aus Graphiten vom chinesischen Typ, Graphiten vom Lac-Knife-Typ und Graphiten vom brasilianischen Typ bestehenden Gruppe ausgewählt ist.

7. Gereinigte Graphitteilchen, die durch Ausführung eines in einem der Ansprüche 1 bis 6 definierten Verfahrens erhältlich sind.

8. Gereinigte Graphitteilchen nach Anspruch 7, **dadurch gekennzeichnet, dass**:
a) ihr mittels Röntgenstrahlen erhaltener Gitterebenenabstand d002 zwischen 3,35 Å und 3,38 Å beträgt;
b) ihre spezifische Oberfläche zwischen 0,4 und 55 m²/g beträgt; und
c) ihr Reinheitsgrad zwischen 98,5 % und 99,99 % beträgt.

9. Gereinigte Graphitteilchen nach Anspruch 7 oder 8 mit einer Größe zwischen 1 und 50 µm, deren Verunreinigungen und Korrosionsstellen teilweise oder vollständig von der Oberfläche dieser Teilchen entfernt wurden.

10. Verfahren zur Herstellung einer Kohlenstoffanode für einen wiederaufladbaren elektrochemischen Generator, der ein Alkalimetall oder Erdalkalimetall umfasst, wobei das Verfahren darin besteht, in einem der Ansprüche 7 bis 9 definierte Teilchen in Anodenform zu bringen.

11. Verfahren zur Herstellung einer Kohlenstoffanode für einen wiederaufladbaren elektrochemischen Generator nach Anspruch 10, worin die gereinigten Kohlenstoffteilchen mit zumindest einem Bindemittel und einem Lösungsmittel vermischt werden und das so erhaltene Gemisch auf einem Metallkollektor verteilt wird.

12. Verfahren zur Herstellung einer Kohlenstoffanode nach einem der Ansprüche 10 bis 11, **dadurch gekennzeichnet, dass** das Alkalimetall Lithium ist.

13. Kohlenstoffanode auf Basis von in einem der Ansprüche 7 bis 9 definierten gereinigten Graphitteilchen.

14. Elektrochemische Zelle, umfassend eine Anode nach Anspruch 13.

15. Elektrochemische Zelle nach Anspruch 14, **dadurch gekennzeichnet, dass** sie eine Lithiumionen-Zelle ist.
